# FASCICULE DE BREVET EUROPEEN

(11) **EP 3 947 958 B1**
(45) Date de publication et mention de la délivrance du brevet: **11.09.2024**
(21) Numéro de dépôt: 20713000.6
(22) Date de dépôt: 26.03.2020
(51) Int. Cl.: F03C 1/04, F16C 33/04, F16C 33/10

(54) **MACHINE HYDRAULIQUE COMPORTANT UN PALIER PERFECTIONNÉ**
HYDRAULISCHE MASCHINE MIT EINEM VERBESSERTEN GLEITLAGER
HYDRAULIC MACHINE WITH AN IMPROVED SLIDING BEARING

(30) Priorité: 27.03.2019 FR 1903205
(43) Date de publication de la demande: 09.02.2022
(73) Titulaire: Poclain Hydraulics Industrie, 60410 Verberie (FR)
(72) Inventeur: ENGRAND, Julien, René, 60410 Verberie (FR); GRILLON, Gilles, 60410 Verberie (FR); QUERTELET, Stéphane, Bernard, 60410 Verberie (FR)
(74) Mandataire: Regimbeau
(86) Numéro de dépôt international: PCT/EP2020/058510
(87) Numéro de publication internationale: WO 2020/193694

(56) Documents cités:
- EP-A1- 0 191 674
- EP-A1- 3 290 726
- WO-A1-2017/149162
- DE-A1- 19 902 565
- DE-A1- 3 706 571
- FR-A5- 2 155 640

## Description

### DOMAINE TECHNIQUE

La présente invention concerne le domaine des machines hydrauliques.

La présente invention concerne en particulier, mais non exclusivement, les machines hydrauliques à pistons radiaux.

### ETAT DE LA TECHNIQUE

On a déjà proposé de nombreux types de machines hydrauliques.

On trouvera un exemple de réalisation d'une machine conforme à l'état de la technique, telle qu'illustrée sur les figures 1 et 2 annexées, dans le document FR 2 796 886.

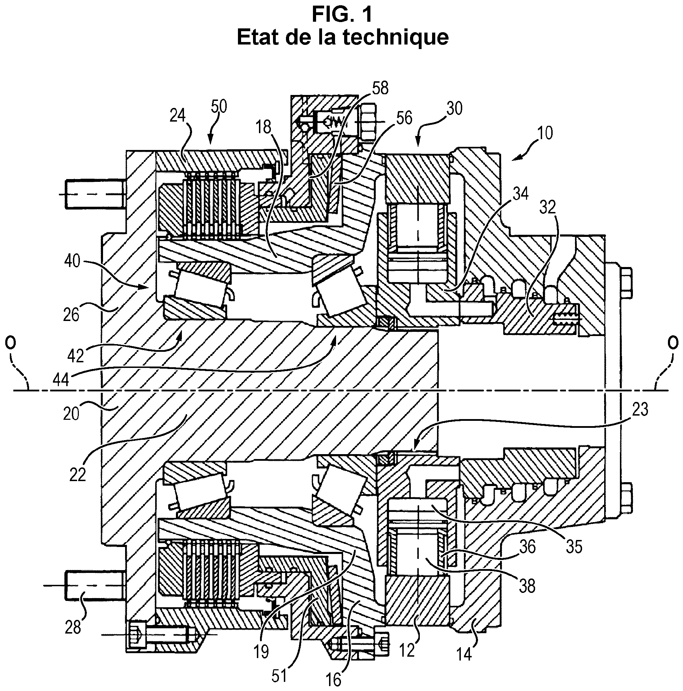

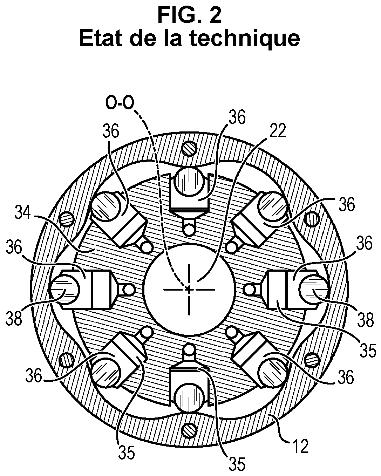

On aperçoit sur ces figures 1 et 2 annexées une machine hydraulique qui comprend essentiellement cinq ensembles complémentaires : un boîtier 10, un arbre 20, un ensemble 30 formant moteur ou pompe disposé entre le boîtier 10 et l'arbre 20, des moyens 40 formant paliers de guidage à rotation relative de l'arbre 20 par rapport au boîtier 10, autour de l'axe O-O, et un frein 50. Le boitier 10 est destiné à être fixé au châssis d'une machine ou d'un véhicule.

Chacun des cinq ensembles précités peut faire l'objet de nombreuses variantes de réalisation.

Selon le mode de réalisation représenté sur les figures 1 et 2, le boîtier 10 comprend une came à lobes multiples 12 prise en sandwich entre deux éléments latéraux 14, 16 du boîtier.

Selon le mode de réalisation représenté sur les figures 1 et 2, l'arbre 20 comprend un élément central 22, un élément radialement externe 24 et un disque de liaison 26 entre une extrémité axiale de l'élément central 22 et une extrémité axiale de l'élément radialement externe 24.

L'arbre 20 supporte une prise de force 28 adaptée pour porter un accessoire qui doit être entraîné à rotation, par exemple la jante d'une roue ou tout autre équipement, dans le cas où la machine constitue un moteur.

Dans le cas où la machine constitue une pompe, la prise de force 28 reçoit un couple mécanique moteur appliqué sur l'entrée de la machine.

L'élément latéral de boîtier 16 possède une extension axiale longitudinale 18 intercalée entre l'élément central 22 et l'élément radialement externe 24. L'extension axiale longitudinale 18 est reliée à l'élément latéral de boîtier 16 par un élément de liaison 19, transversal à l'axe O-O de la machine et en forme générale de rondelle.

La machine représentée sur les figures 1 et 2 annexées comprend un ensemble 30 du type moteur ou pompe à pistons radiaux. Un tel ensemble est connu en soi.

L'ensemble 30 formant moteur ou pompe comprend pour l'essentiel un distributeur 32, un bloc cylindres 34 qui comporte une pluralité de cylindres radiaux 35 logeant chacun un piston respectif 36 portant chacun un galet 38 en appui contre la came 12 solidaire du boîtier 10.

Le nombre de cylindres 35 et donc de pistons 36 du bloc cylindres 34 diffère du nombre de lobes de la came 12.

Selon les figures 1 et 2, la came 12 est radialement externe et le bloc cylindres 34 situé radialement à l'intérieur de la came 12 possède des cylindres 35 qui débouchent radialement vers l'extérieur, en regard de la came 12.

De façon connue en soi, lorsque le distributeur 32 applique cycliquement un fluide sous pression à l'intérieur des cylindres 35, la sollicitation des pistons 36 et galets associés 38 sur la came 12 entraîne le bloc cylindres 34 à rotation par rapport à la came 12 et par conséquent par rapport au boîtier 10. Le distributeur 32 est alimenté via l'élément 14 qui forme couvercle et raccord pour l'alimentation du distributeur.

Le bloc cylindres 34 étant lié à rotation avec l'élément central 22 de l'arbre 20 par un système de cannelures longitudinales 23, on comprend que dans ce cas l'arbre 20 est entraîné à rotation par la pression du fluide appliquée par le distributeur 32. La machine hydraulique constitue dans ce cas un moteur.

Lorsqu'au contraire, un effort mécanique est appliqué par la prise de force 28 sur l'arbre 20 dans le sens d'un entraînement à rotation par rapport au boîtier 10 autour de l'axe O-O, le déplacement des galets 38 et pistons 36 par rapport aux lobes de la came 12 induit une variation de volume des cylindres 35 et par conséquent applique une pression de fluide sur le distributeur 32. La machine fonctionne alors en pompe.

Cette machine est réversible, et donc fonctionne indifféremment en tant que pompe ou moteur, et peut également tourner dans deux sens de rotation.

Selon la représentation donnée sur la figure 1, les moyens formant paliers 40 sont constitués de deux roulements à rouleaux coniques 42, 44 intercalés entre l'élément central 22 de l'arbre 20 et l'élément de boîtier 18, lui-même intercalé entre l'élément central 22 de l'arbre 20 et l'élément d'arbre radialement externe 24.

Les roulements 42, 44 sont dimensionnés pour supporter les efforts axiaux et radiaux qui s'exercent sur l'arbre 20. La surface d'appui des rouleaux ou des billes étant limitée à une génératrice de contact, la pression de contact est très élevée. Pour diminuer cette pression de contact, et obtenir des roulements qui ont une bonne durée de vie, on est tenté d'augmenter le nombre de rouleaux. Cependant cela induit des roulements de grand diamètre, qui sont très encombrants, chers, et qui nécessitent un arbre de grand diamètre. Cela augmente l'encombrement de la machine et son prix, au niveau du palier.

La prise de force 28 peut être de toute nature, pour réaliser un entrainement en rotation. Ce peut être une sortie d'arbre conique, ou a clavette, ou un pignon pour une chaine ou un barbotin de chenille. Ce peut être comme sur la figure 1 un flasque destiné à recevoir une roue d'un véhicule.

L'ensemble de l'arbre 20 et de la fixation 28 forme un moyeu, par exemple un moyeu de roue, porté par les moyens de palier 40 et la partie 18 de l'élément de boîtier.

Selon le mode de réalisation donné sur la figure 1, le frein 50 est du type frein à disques.

Il est formé d'un empilement de disques liés alternativement à rotation les uns à l'arbre 20, plus précisément en l'espèce à l'élément radialement externe 24, et les autres à l'élément de boîtier 18 disposé entre l'élément central 22 de l'arbre 20 et l'élément radialement externe 24.

Le frein à disques 50 est disposé sur l'extrémité axiale de la machine adjacente à la prise de force 28, c'est-à-dire proche de la prise de force 28, à l'opposé du distributeur 32 par rapport au bloc cylindres 34.

Comme on le voit sur la figure 1, les disques alternés du frein 50 sont sollicités en appui mutuel, donc en position de freinage, par un élément élastique 56, par exemple du type rondelle Belleville.

L'organe élastique 56 est disposé entre d'une part un élément du boîtier, par exemple l'élément 19 qui assure la liaison entre l'élément latéral 16 et l'extension axiale 18, et d'autre part un piston 51.

Un effort antagoniste à l'organe élastique 56 peut être appliqué par injection d'une pression de fluide dans une chambre de commande 58 afin de placer le frein 50 en position de défreinage.

### BASE DE L'INVENTION

La présente invention a pour objectif de perfectionner les machines hydrauliques du type illustré sur les figures 1 et 2 annexées.

La présente invention a en particulier pour but de proposer une nouvelle machine hydraulique qui soit compacte et permette de supporter de fortes charges.

On a en effet tenté depuis de nombreuses années d'apporter des perfectionnements à la machine hydraulique du type illustré sur les figures 1 et 2 annexées.

On trouvera des exemples de telles propositions dans les documents EP 1 072 814, EP 2 841 763 et WO 98 30800. EP 0 191 674 A1 divulgue une machine hydraulique selon le préambule de la revendication 1 ainsi qu'un coussinet lisse conique selon le préambule de la revendication 17.

Cependant, la majorité des tentatives de perfectionnement ainsi proposées n'ont pas donné totalement satisfaction.

Les objectifs précités sont atteints dans le cadre de la présente invention grâce à une machine hydraulique à pistons comprenant :
- un boîtier,
- un arbre mobile à rotation par rapport au boîtier,
- une came solidaire de l'un du boîtier ou de l'arbre,
- un bloc cylindres comprenant des pistons mobiles dans le bloc cylindres en regard de la came pour générer une rotation relative entre le bloc cylindres et la came, ledit bloc cylindres étant lié à rotation avec l'autre de l'arbre ou du boîtier,
- des moyens formant paliers de guidage à rotation de l'arbre par rapport au boîtier,
les moyens formant paliers de guidage à rotation comprenant un coussinet conique lisse intercalé entre un élément de boîtier et un élément lié à rotation avec l'arbre, le coussinet lisse conique comprenant une fente radiale.

Selon des caractéristiques optionnelles de l'invention :
- le coussinet conique lisse est intercalé entre le bloc cylindres et un élément de boîtier,
- le coussinet conique lisse est intercalé entre un élément de boîtier et une bague conique liée à rotation avec l'arbre,
- le bloc cylindres comprend des pistons mobiles radialement dans le bloc cylindres et la came est une came multilobes,
- le coussinet lisse conique est réalisé par une technique de roulage,
- le coussinet lisse conique comprend des moyens anti-rotation par rapport à un élément support, par exemple sous forme d'au moins une languette radiale,
- le coussinet lisse conique comprend des moyens, tels que des encoches permettant d'assurer une couverture d'un fluide de lubrification sur la totalité de la surface du coussinet lisse conique en déplacement relatif par rapport à la pièce en vis-à-vis,
- le coussinet lisse conique comprend des encoches sur l'une au moins de sa périphérie extérieure et/ou de sa périphérie intérieure pour assurer une entrée d'huile sur la surface du coussinet conique,
- les encoches d'entrée d'huile sont adjacentes à des languettes anti-rotation prévues sur le bord radialement externe du coussinet conique,
- le coussinet conique comprend des encoches d'entrée d'huile sur son bord radialement externe et des encoches complémentaires dans sa masse ou sur son bord radialement interne,
- le plus grand rayon des encoches formées dans la masse ou sur le bord radialement interne du coussinet conique est supérieur au plus petit rayon des encoches débouchant sur le bord extérieur radialement extérieur du coussinet conique,
- le coussinet lisse conique comprend des lumières radiales de passage d'huile en regard de languettes anti-rotation,
- le coussinet comprend deux jeux de lumières ou encoches décalées angulairement et séparées, couvrant des plages radiales qui se superposent de sorte que les lumières et encoches couvrent en complément la totalité de l'étendue radiale du coussinet,
- l'un des éléments adjacents au coussinet lisse conique, bloc cylindres et éléments de boîtier ou arbre, voire bague support, comprend un muret d'arrêt du coussinet lisse conique placé en regard de l'un de ses bords périphériques, de préférence son bord périphérique radialement externe.
- l'élément qui définit le muret précité comporte un dégagement en regard du muret permettant au moins un léger fléchissement de l'élément porteur du muret, afin de réduire la pression sur les bords du coussinet.
- l'un des éléments adjacents au coussinet lisse conique, bloc cylindres et éléments de boîtier ou arbre, voire bague support, possède un dégagement en regard du coussinet conique évitant un appui direct sur le coussinet conique sur la totalité de son étendue radiale.

Selon d'autres caractéristiques optionnelles avantageuses de l'invention :
- la machine comprend un frein,
- le frein est un frein à disques,
- le frein comprend une chambre de commande,
- le frein est sollicité par un organe élastique en position de freinage et le frein comporte une chambre adaptée pour recevoir une pression de défreinage,
- le coussinet lisse conique est placé dans un fluide tel que de l'huile.

Selon un mode de réalisation particulier, la machine hydraulique comprend le coussinet lisse conique serré entre un élément de boîtier et le bloc cylindres ou une bague support et comporte un système de serrage sous précontrainte du coussinet lisse conique.

La présente invention concerne également en soi les coussinets lisses coniques du type précité.

La présente invention concerne également les engins, tels que véhicules ou tout engin de chantier, équipés d'au moins une machine hydraulique de type précité.

### DESCRIPTION DES FIGURES

D'autres caractéristiques, buts et avantages de la présente invention, apparaîtront à la lecture de la description détaillée qui va suivre, et en regard des dessins annexés, donnés à titre d'exemples non limitatifs et sur lesquels :
- la figure 1 précédemment décrite représente une vue en coupe axiale longitudinale d'un exemple de réalisation d'une machine hydraulique conforme à l'état de la technique,
- la figure 2 également précédemment décrite représente une vue en coupe transversale de l'élément de bloc cylindres d'une telle machine conforme à l'état de la technique,
- la figure 3 représente une vue en coupe axiale longitudinale d'une machine hydraulique conforme à un mode de réalisation de la présente invention,
- la figure 4 représente une vue en perspective d'un coussinet lisse conique conforme à la présente invention,
- la figure 5 représente une vue partielle en coupe axiale longitudinale d'une machine hydraulique conforme à l'invention et illustre plus précisément le positionnement du coussinet lisse conique conforme à l'invention entre un bloc cylindres et un élément de boîtier,
- la figure 6 représente une vue similaire à la figure 5 selon un plan de coupe radial passant par une lumière oblongue réalisée dans la masse du coussinet conique pour assurer un transfert d'huile,
- la figure 7 représente une vue partielle en perspective du logement support de coussinet lisse conique formé dans un élément de boîtier,
- la figure 8 représente une vue similaire à la figure 7 après la mise en place d'un coussinet lisse conique,
- la figure 9 représente une vue en plan d'un coussinet lisse conique conforme à une autre variante de réalisation de la présente invention,
- la figure 10 représente une vue en coupe transversale du coussinet lisse conique de la figure 9 selon le plan de coupe référencé X-X sur la figure 9,
- la figure 11 représente une vue en coupe axiale longitudinale d'une machine hydraulique conforme à un second mode de réalisation de la présente invention et
- la figure 12 représente une vue en coupe axiale longitudinale d'une machine hydraulique conforme à une variante de réalisation du second mode de réalisation de la présente invention.

### DESCRIPTION DETAILLEE DE L'INVENTION

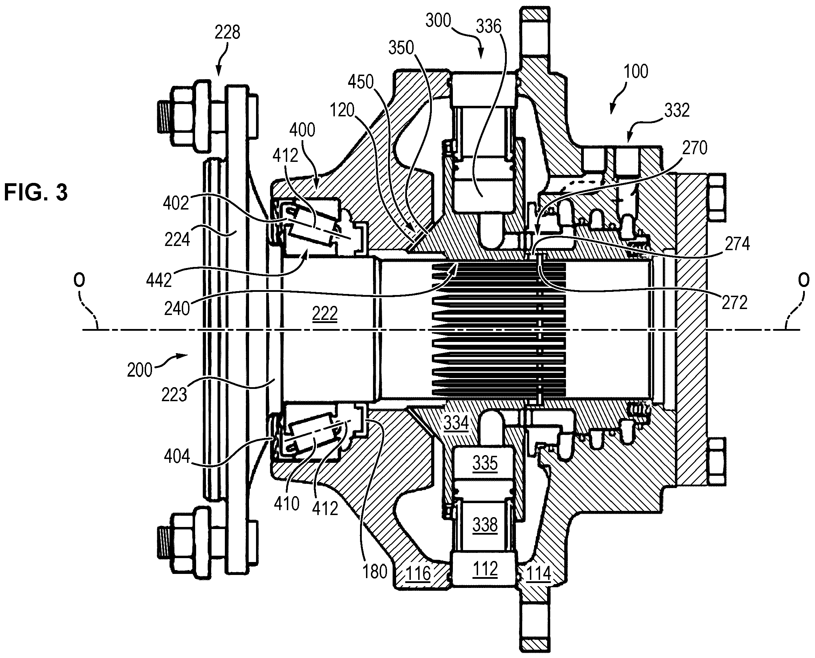

On va dans un premier temps décrire l'architecture générale de la machine hydraulique conforme à la présente invention illustrée sur la figure 3 annexée.

On retrouve sur cette figure 3, une machine hydraulique comprenant principalement quatre ensembles : un boîtier 100, un arbre 200, un ensemble 300 formant moteur ou pompe et des moyens 400 formant paliers de guidage à rotation de l'arbre 200 par rapport au boîtier 100. Le cas échéant la machine conforme à la présente invention peut également être munie d'un frein placé entre un élément du boîtier 100 et un élément de l'arbre 200, par exemple un frein à disques du type illustré sur la figure 1.

Chacun de ces ensembles peut en lui-même faire l'objet de nombreux modes de réalisation. Ils ne seront donc pas décrits dans le détail par la suite.

On rappellera simplement la structure générale et la fonction générale de chacun de ces ensembles.

Le boîtier 100 est destiné à être fixé au châssis d'une machine ou d'un véhicule. Il comprend principalement une came multilobes 112 disposée entre deux éléments latéraux de boîtier 114, 116.

L'arbre 200 comprend un élément d'arbre ou tourillon central 222 centré sur l'axe de la machine O-O.

Une extrémité du tourillon 222 qui émerge à l'extérieur du boîtier 100 forme une prise de force 228 adaptée pour supporter tout accessoire approprié, par exemple la jante d'une roue, un barbotin de chenille, ou tout moyen équivalent.

Cette extrémité axiale émergeante de l'arbre 200, qui porte la prise de force 228 est évasée sous forme d'un plateau 224.

Selon le mode de réalisation particulier représenté sur la figure 3, l'ensemble 300 formant moteur ou pompe est constitué d'un sous-ensemble à pistons radiaux.

Cet ensemble 300 comprend de façon connue en soi un distributeur 332, un bloc cylindres 334 possédant une pluralité de cylindres radiaux 335 recevant chacun un piston 336 muni à son extrémité radialement externe d'un galet 338 prenant appui sur la came multilobes 112.

De façon connu en soi, le nombre de cylindres 335 du bloc cylindres 334 diffère de préférence du nombre de lobes de la came multilobes 112.

Ainsi, lors du fonctionnement en moteur, un fluide sous pression étant appliqué aux cylindres 335 par le distributeur 332, l'effort exercé par les pistons 336 et les galets 338 sur les lobes de la came 112 induit un couple de rotation entre le bloc cylindres 334 et la came 112.

Le distributeur 332 comprend généralement une partie centrale glissante axialement dans la partie de boitier 114 formant couvercle, et indexée en rotation par celui-ci, pour former une liaison glissière. La partie centrale du distributeur porte des gorges en général étagées pour son alimentation par la pièce 114 formant couvercle et raccord d'alimentation vers l'extérieur de la machine. Si les gorges sont étagées, le distributeur 332 reçoit une poussée pour l'appliquer sur le bloc cylindre 334, ce qui réalise l'étanchéité glissante en rotation pour l'alimentation des orifices de chambres de pistons du bloc 334. Le bloc 334 est mobile en rotation, et la partie centrale du distributeur 332 est mobile axialement et pressée contre le bloc 334 par la poussée. L'interface entre le bloc 334 et le distributeur 332 réalise donc une étanchéité en rotation. Des ressorts de poussée entre la partie centrale du distributeur 332 et l'élément de boîtier 114 maintiennent une poussée minimale en permanence. Les deux pièces 332, 334 en rotation relative permettent aux cylindres 335 de se raccorder alternativement en alimentation ou en échappement sur les lignes d'alimentation hydrauliques de la machine.

Lors d'un fonctionnement en pompe, un couple de rotation est appliqué sur l'arbre 200, typiquement par l'intermédiaire de la prise de force 228. La rotation relative du bloc cylindres 334 par rapport au boîtier 100 induit un déplacement des pistons 336 sur la came 112 et en conséquence une variation cyclique du volume des cylindres 335 qui génère une sortie de fluide sous pression en sortie du distributeur 332.

Le distributeur 332 possède des canaux destinés à assurer l'acheminement de l'huile entre les cylindres 335 et l'extérieur de la machine.

Un tel ensemble 300 est décrit par exemple dans les documents FR 2651836, FR 2582058 et EP 2531720.

Il ne sera donc pas décrit plus en détail par la suite.

Le bloc cylindres 334 est lié à rotation avec l'élément central d'arbre 222 par l'intermédiaire de cannelures axiales complémentaires 240.

Comme on le voit également sur la figure 3, selon l'invention les moyens 400 formant palier comprennent un roulement 442 comprenant des rouleaux coniques 410 et un coussinet lisse conique 450 intercalés entre un élément du boîtier 100 et un élément lié à rotation avec l'arbre 200.

Plus précisément selon la figure 3, le roulement à rouleaux coniques 442 est intercalé entre l'extrémité distale de l'élément latéral 116 du boîtier 100 et l'extrémité distale de l'arbre 222 proche de la prise de force 228.

Le roulement 442 et le coussinet conique 450 sont ainsi placés sur le côté du bloc cylindres 334 opposé au distributeur 332.

Par « roulement conique à rouleaux » on entend un roulement possédant des rouleaux cylindriques de révolution, voire tronconiques, mais dont les axes individuels 412 sont répartis sur un cône. Le roulement à rouleaux 442 est de préférence placée dans la graisse.

A cette fin il est de préférence placé dans une chambre 402 fermée axialement d'un côté par un joint 180 et de l'autre côté par un joint 404.

Par ailleurs le coussinet conique 450 est intercalé entre le boîtier 100 et le bloc cylindres 334. Il est de préférence placé dans l'huile.

A cette fin, le boîtier 100, plus précisément l'élément latéral de boîtier 116, porte le joint 180 précité en appui sur l'arbre 222 et assurant une isolation entre la chambre 402 remplie de graisse contenant le roulement 442 et la chambre logeant le coussinet lisse conique 450.

Plus précisément, le coussinet lisse conique 450 est intercalé entre d'un côté un élément du boîtier 100 lié à l'élément 116 de boîtier et le bloc cylindres 334 de l'autre côté.

Plus précisément encore, le coussinet lisse conique 450 est intercalé entre une portée conique 120 formée sur le boîtier 100 au niveau de l'élément latéral 116, et une portée conique 350 formée sur le bloc cylindres 334.

Les deux portées 120, 350 sont parallèles entre elles.

Le coussinet lisse conique 450 et les portées 120, 350 coniques, ont leur concavité dirigée à l'opposé de l'extrémité axiale distale de la machine proche de la prise de force 228. La concavité du coussinet lisse conique 450 et des portées 120, 350 coniques est ainsi dirigée vers le distributeur 332.

De préférence les axes 412 des rouleaux 410 du roulement 442 convergent vers l'axe O-O en rapprochement du distributeur 332. Ainsi les axes 412 des rouleaux 410 s'appuient sur un cône dont la concavité est dirigée à l'opposé du distributeur 332, soit vers l'extrémité distale de la machine. En d'autres termes de préférence le roulement 442 et le coussinet conique 450 ont leurs concavités orientées dans des directions opposées.

On décrira plus en détail par la suite, les portées 120, 350 et le coussinet lisse conique 450.

L'effort axial exercé par le distributeur 332 tend à pousser le bloc cylindres 334 axialement sur le coussinet conique 450. Ce coussinet conique 450 réalise un appui direct sur le corps de palier formé par l'élément latéral 116 de boîtier, au niveau de la portée conique 120.

Le coussinet lisse conique 450 permet ainsi de reprendre à la fois les efforts axiaux dus à la poussée axiale du distributeur 332 et les efforts cycliques radiaux résultant du déplacement des galets 338 sur la came multilobes 112. Sans cette reprise des efforts radiaux exercés par le bloc cylindres 334, l'arbre 200 serait sujet à des oscillations résultant des poussées variables dues à ce bloc cylindres 334, lorsque les pistons 336 passent les lobes de la came 112.

Le boîtier 100 et plus précisément au moins la portée conique 120 est réalisée préférentiellement en fonte ou en acier fondu ou moulé, par des opérations de fonderie. Le bloc cylindres 334 est préférentiellement réalisé en acier traité usiné, éventuellement après forgeage.

Ainsi, le coussinet lisse conique 450 est préférentiellement monté statique sur le corps de boîtier 100, plus précisément sur l'élément latéral 116, c'est-à-dire fixe par rapport à celui-ci. Il est au contraire glissant, à rotation relative, par rapport au bloc cylindres 334.

En effet, le bloc cylindres 334 réalisé en acier traité usiné est plus lisse et plus dur que la fonderie du boîtier 100 rugueuse.

Par ailleurs de préférence le coussinet lisse conique 450 répond aux caractéristiques suivantes quant à sa composition.

En premier lieu, la surface 452 du coussinet lisse conique 450 qui repose sur la surface en regard en déplacement relatif à rotation, soit en l'espèce la portée 350 du bloc cylindres, est adaptée pour présenter un état de surface à faible coefficient de friction. Ce faible coefficient de friction peut être obtenu par un traitement de surface du coussinet lisse conique 450, sur sa surface 452. Le faible coefficient de friction peut aussi être obtenu par le choix du matériau composant cette surface 452. A cette fin la surface 452 peut être formée par un matériau synthétique à faible coefficient de friction ou encore en un matériau dit « de glissement », par exemple à base de polyfluorure de vinylidine (PVDF) ou de polyétheréthercétone (PEEK). La surface 452 peut également être chargée par des particules de glissement, telles que des particules de bronze ou des morceaux d'un matériau synthétique fluoré, par exemple du polytétrafluoroéthylène.

En second lieu, le coussinet lisse conique 450 peut être composé d'une âme, par exemple une âme en acier, sur laquelle est déposée une couche de matériau à faible coefficient de friction, telle que mentionnée ci-dessus, le cas échéant avec interposition d'une couche intermédiaire adaptée pour assurer l'adhésion de la couche superficielle à faible coefficient de friction. Une telle couche intermédiaire peut être formée à base de bronze, par exemple de billes de bronze, ou d'un matériau fritté poreux, par exemple aggloméré et fixé à l'âme par exemple par fusion. La couche superficielle à faible coefficient de friction peut être imprimée ou imprégnée sur la couche intermédiaire, préférentiellement poreuse. Le coussinet lisse conique 450 est alors formé d'une structure trois couches.

A titre de variante, le coussinet lisse conique 450 peut être formé par dépôt du matériau à faible coefficient de friction ou « matériau de glissement », de préférence synthétique, directement sur l'âme, par exemple en métal et préférentiellement en acier. Dans ce cas la couche intermédiaire précitée est omise. Le coussinet lisse conique 450 est alors formé d'une structure deux couches.

Au titre d'une autre variante, le coussinet lisse conique 450 peut être formé monocouche en un matériau massif à faible coefficient de friction, par exemple en bronze massif, ou bicouche en une couche de matériau à faible coefficient de friction, par exemple en bronze, déposée sur une âme par exemple en acier.

Les bronzes phosphoreux sont particulièrement aptes au glissement sur de l'acier.

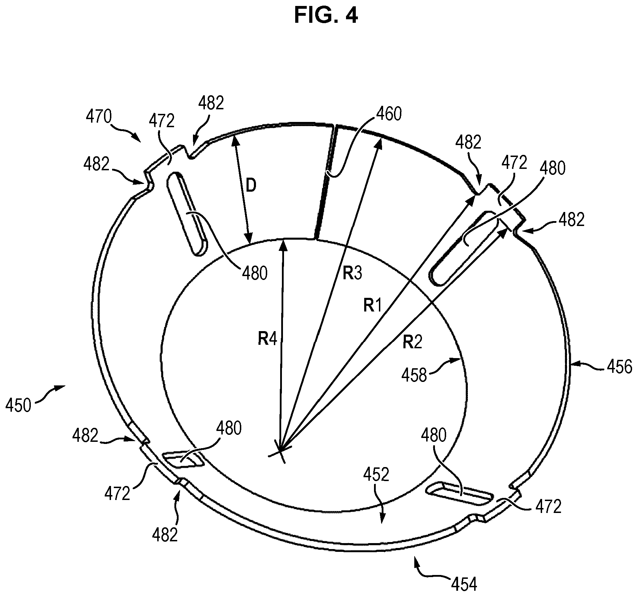

On va maintenant décrire le mode de réalisation du coussinet lisse conique représenté sur les figures 4 à 8.

De préférence, le coussinet lisse conique 450 est formé par roulage conique à partir d'un flanc en métal.

Une fois formé, l'ouverture angulaire du coussinet 450 est de préférence comprise entre 30 et 60°, préférentiellement de l'ordre de 45°.

On entend par « ouverture angulaire du coussinet » l'angle A formé entre l'axe O-O de la machine et les faces coniques 452, 454 du coussinet 450.

Le coussinet lisse conique 450 conforme à la présente invention a la forme d'un tronc de cône. Ses deux surfaces principales 452, 454 sont des surfaces tronconiques délimitées chacune par une surface correspondant à une courbe directrice ou génératrice rectiligne centrée sur un centre qui correspond après montage à l'axe O-O et s'appuie sur un cercle qui correspond à la périphérie radialement externe du coussinet 450.

La surface 452 est une surface concave dirigée vers la portée conique 350 du bloc cylindres 334. La surface 454 est une surface convexe, parallèle à la surface 452, dirigée vers la portée conique 120 du boîtier 100.

Sur les figures annexées, on a référencé 456 le bord radialement externe du coussinet lisse conique et 458 le bord radialement interne du même coussinet lisse conique 450.

L'étendue radiale du coussinet lisse conique 450 peut faire l'objet de nombreuses variantes de réalisation, en fonction de la configuration de la machine, notamment de sa cylindrée et de la charge qu'elle doit supporter et entraîner.

A titre d'exemple non limitatif, le rayon R3 du bord radialement externe 456 du coussinet 450 est compris entre 1,5 et 10 fois le rayon R4 du bord radialement interne 458 du coussinet 450, très préférentiellement entre 3 et 6 fois le rayon du bord radialement interne 458 du coussinet 450.

Par ailleurs la distance D entre le bord radialement externe 456 et le bord radialement interne 458 du coussinet conique 450, qui correspond à la largeur radiale du coussinet conique 450, peut être comprise entre 25 % et 75% de la distance entre l'axe O-O et le bord radialement externe 456 du coussinet, soit le rayon R3.

On aperçoit sur les figures annexées, notamment sur la figure 4, une fente radiale traversante 460. Cette fente 460 est délimitée après roulage conique par les deux bords d'extrémité du flanc initial formant le coussinet 450, initialement opposés et distants, mais rapprochés par le roulage.

Dans le cadre de l'invention, cette fente 460 participe à la circulation d'huile entre le bord radialement externe 456 et le bord radialement interne 458, et ce faisant à la circulation d'huile sur la totalité de la surface interne du coussinet conique 450 lors de la rotation relative entre le bloc cylindres 334 et le coussinet lisse conique 450.

La fente 460 définit en effet une veine qui s'étend sur toute l'étendue radiale du coussinet lisse conique 450 et se remplit d'huile sur toute cette étendue radiale. Cette veine d'huile radiale est balayée par la portée conique en regard 350 formée sur le bloc cylindres 334, lors de la rotation relative, de sorte que l'huile recouvre ainsi la totalité de la surface du coussinet lisse conique 450 adjacente au coussinet lisse conique 450.

Selon le mode de réalisation particulier représenté sur les figures, le coussinet conique 450 a sa concavité dirigée vers le bloc cylindres 334.

Le coussinet conique 450 est de préférence chassé dans un logement 122 formé dans le boîtier 100 au niveau de la portée 120 précitée.

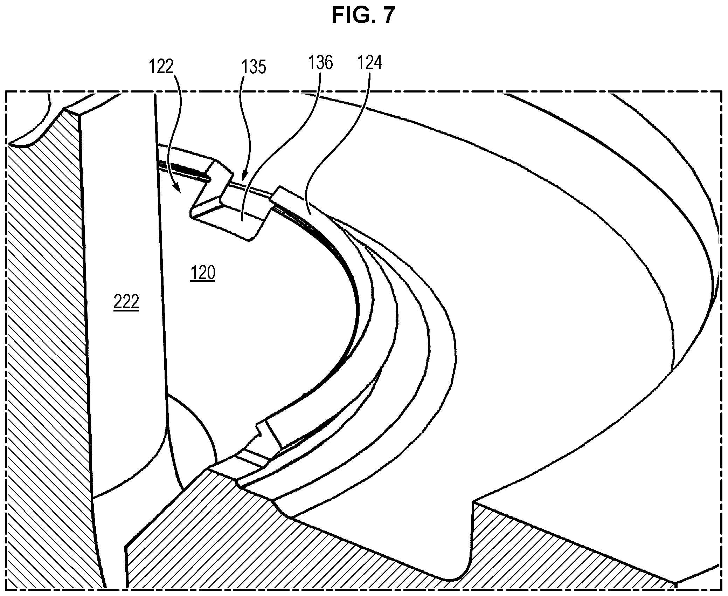

Ce logement 122 visible sur la figure 7 est adapté pour caler radialement le coussinet conique 450. De préférence, le logement 122 possède au moins un muret ou rebord en saillie par rapport à la surface de portée conique 120 précitée. Sur la figure 7, on a référencé un tel muret sous la référence 124 au niveau de la périphérie radialement externe du logement 122. En variante, on pourrait prévoir un muret homologue 124 au niveau de la périphérie radialement interne du muret 122.

L'homme de l'art comprendra que ce muret 124 impose le positionnement radial du coussinet lisse conique 450 dans le logement 122 et évite que le coussinet conique 450 ne se déplace obliquement par rapport à l'axe O-O, notamment lorsque le distributeur 332 cesse au repos d'appliquer une pression sur le bloc cylindres 334 et que par conséquent le bloc cylindres 334 cesse de solliciter le coussinet lisse conique 450.

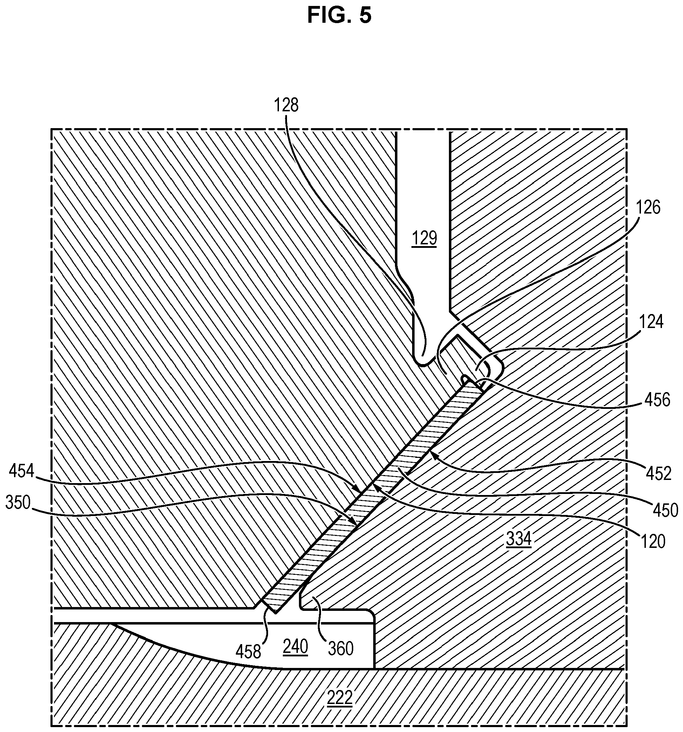

On notera également en regard de la figure 5 que la partie du boîtier 100 qui définit l'extrémité radialement externe du logement 122 et par conséquent le muret 124, possède sur l'arrière de ce muret 124, c'est-à-dire à l'opposé du logement 122, un dégagement 128 qui définit une zone de matière 126 de faible largeur ou amplitude entre le corps du boîtier, plus précisément l'élément latéral 116, et la surface 120 du logement 122.

En d'autres termes, en raison du dégagement 128, le muret 124 est formé sur une paroi 126 de faible épaisseur.

Ce dégagement 128 autorise un certain débattement ou déformation de la zone du boîtier définissant le muret 124 par flexion et par conséquent permet un certain fléchissement sous la pression et ainsi une diminution de la pression sur le bord adjacent, en l'espèce, le bord radialement externe 456, du coussinet lisse conique 450.

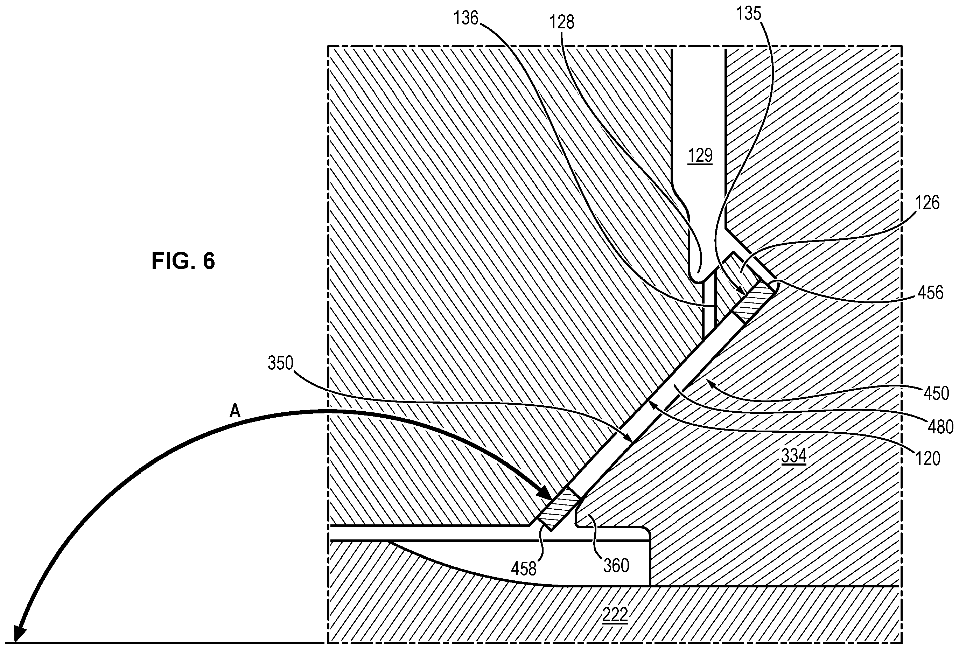

Sur les figures 5 et 6 annexées, on notera que de l'autre côté du coussinet conique 450, c'est-à-dire au niveau de son bord radialement interne 458, le bloc cylindres 334 possède un dégagement arrondi 360, qualifié de « tombée » par l'homme de l'art en mécanique. Le dégagement arrondi 360 est disposé radialement à l'extérieur du bord radialement interne 458 du coussinet dans le prolongement de la portée conique 350 formée sur le bloc cylindres 334 au niveau de la périphérie radialement interne de la portée conique 350. En d'autres termes, le bord 360 du bloc cylindres 334 est à la fois arrondi et disposé sur un rayon plus important que le bord radialement interne 458 du coussinet conique 450. Cette disposition permet que la pression appliquée par le bloc cylindres 334 sur le coussinet conique 450 disparaît progressivement sur le bord radialement interne 458 du coussinet 450, en amont de son bord radialement interne 458.

L'homme de l'art comprendra également en observant les figures annexées que le muret 124 est défini par une surface inclinée par rapport à l'axe O-O et par conséquent définit au niveau de son bord libre un rayon inférieur au rayon externe du bord radialement externe 456 du coussinet conique 450. Ainsi, pour introduire le coussinet lisse conique 450 dans le logement 122, en raison de la présence du muret de calage 124, il est nécessaire que le coussinet 450 possède une élasticité suffisante pour autoriser sa déformation permettant son insertion dans le logement 122. Cette élasticité peut être due à la matière intrinsèque du coussinet conique 450. Elle est renforcée par la présence de la fente traversante 460 précitée.

Le coussinet lisse conique 450 possède par ailleurs des moyens 470 assurant une immobilisation à rotation par rapport à l'un du boîtier 100 ou du bloc cylindres 334 adjacent, de préférence par rapport au boîtier 100.

De tels moyens anti-rotation 470 peuvent faire l'objet de nombreux modes de réalisation.

Selon la représentation donnée sur les figures annexées, les moyens 470 anti-rotation sont formés de languettes 472 en saillie sur le bord radialement externe 456 du coussinet conique 450.

Plus précisément encore, selon le mode de réalisation particulier non limitatif représenté sur les figures annexées, les moyens 470 comprennent plusieurs languettes 472, par exemple quatre languettes 472, en saillie radialement sur l'extérieur et équiréparties autour de l'axe O-O.

Le muret 124 est muni de rainures radiales 135 équiréparties autour de l'axe O-O, en nombre et selon une répartition angulaire identiques aux languettes 472, pour recevoir chacune une languette 472.

Le coussinet conique 450 représenté sur les figures comprend par ailleurs des moyens, en plus de la fente 460, permettant d'assurer une répartition de l'huile dans laquelle baigne le coussinet conique 450 sur la totalité de la surface concave adjacente au bloc cylindres 334 lors de la rotation relative entre le bloc cylindres 334 et le coussinet conique 450.

Le fente 460 participe à cette répartition d'huile en autorisant un transfert de fluide entre le bord radialement externe 456 et le bord radialement interne 458 du coussinet conique 450 et en définissant une veine radiale d'huile balayée par le bloc cylindres 334.

On notera cependant également selon l'invention la présence de lumières additionnelles 480, 482 et 484 réparties sur le coussinet conique 450 et permettant une liaison entre au moins l'une des périphéries radialement externe ou interne du coussinet conique 450 et la surface concave du coussinet.

Plus précisément encore, selon le mode de réalisation particulier non limitatif représenté sur les figures 4 à 8 annexées, le coussinet conique 450 comprend au moins une lumière oblongue rectiligne 480 formée radialement dans la masse du coussinet conique 450, de préférence en regard de chacune des languettes 472.

Il est ainsi prévu quatre lumières oblongues radiales 480 équiréparties sur la périphérie du coussinet conique selon le mode de réalisation illustré sur la figure 4.

On entend par « formée dans la masse du coussinet conique 450 », que les lumières 480 traversent l'épaisseur du coussinet conique 450 et relient donc les deux faces 452 et 454, sans cependant déboucher sur la périphérie radialement externe 456, ni sur la périphérie radialement interne 458 du coussinet conique 450.

Par ailleurs, le coussinet conique 450 comprend au moins une encoche sur l'un de ses bords périphériques, en l'espèce selon les figures 4 à 8, sur le bord périphérique externe 456. Ces encoches sont référencées 482 sur la figure 4 annexée.

Plus précisément encore, il est ainsi prévu deux encoches 482 respectivement de part et d'autre de chacune des languettes anti-rotation 472.

Par ailleurs, le plus grand rayon R2 des lumières oblongues 480 est supérieur au plus petit rayon R1 du fond des encoches 482.

Ainsi, l'huile qui parvient dans le fond des encoches 482 est balayée par le bloc cylindres 334 lors du déplacement relatif entre le bloc cylindres 334 et le coussinet 450 et recouvre une partie de même rayon du coussinet 450. Elle peut aussi être dirigée vers les lumières oblongues 480 pour couvrir ainsi quasi-intégralement la surface concave du coussinet 450.

On notera par ailleurs que le plus grand rayon R2 des lumières oblongues 480 formées dans le coussinet conique 450 est disposé en regard de rainures 136 formées dans le boîtier au niveau des logements 135 recevant les languettes anti-rotation 472. Ces rainures 136 traversent les parois 126 et permettent ainsi un acheminement d'huile à partir de la chambre 129 définie entre l'élément latéral 116 de boîtier et le bloc cylindres 334, vers les lumières 480.

Ainsi du côté radialement externe 456 du coussinet conique 450, l'huile peut pénétrer par ces rainures 136 et les encoches 482 dans les lumières oblongues 480.

Du côté radialement interne 458, comme on le voit sur la figure 6, les lumières oblongues 480 s'étendent de préférence radialement vers l'intérieur, c'est-à-dire en direction de l'axe O-O, au-delà de la tombée ou bord arrondi 360 formé dans le bloc cylindres 334.

Ainsi l'huile qui chemine par l'intermédiaire des lumières oblongues 480 peut s'échapper radialement vers l'intérieur au niveau de ce bord arrondi 360.

Les encoches radialement externes 482 et les lumières oblongues 480 forment en combinaison des veines d'huile qui s'étendent sur la quasi-totalité de l'étendue radiale du coussinet conique 450 et permettent une parfaite lubrification de la surface 452 du coussinet 450 balayée par le bloc cylindres 334 lors du fonctionnement de la machine.

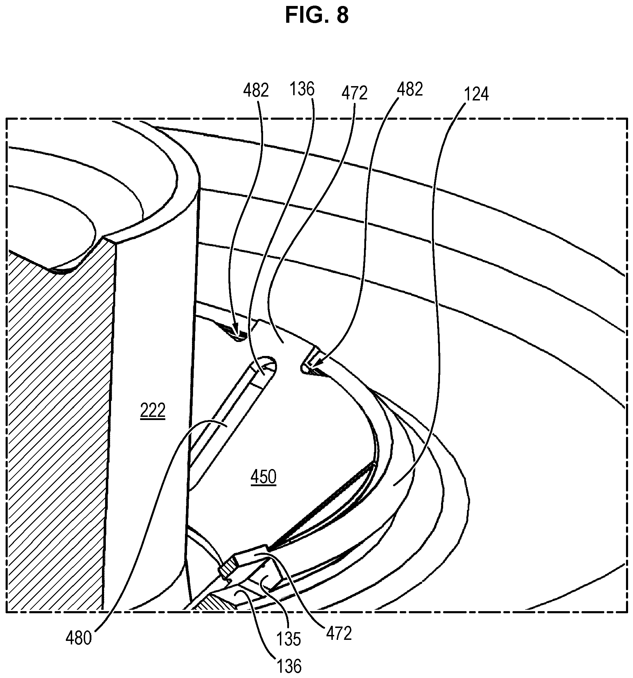

On aperçoit sur la figure 8 l'entrée d'huile dans les lumières oblongues 480 formée par les rainures 136 sous les languettes 472. Sur la même figure 8 on aperçoit le muret d'arrêt 124 du coussinet lisse conique 450 qui empêche la sortie du coussinet 450 quand il n'y a pas de pression axiale appliquée par le distributeur 332.

Le système de « tombée » ou dégagement 360 et/ou le système de muret 124 peuvent être placés indifféremment sur le bord radialement externe 456 ou sur le bord radialement interne 458 du coussinet lisse conique 450.

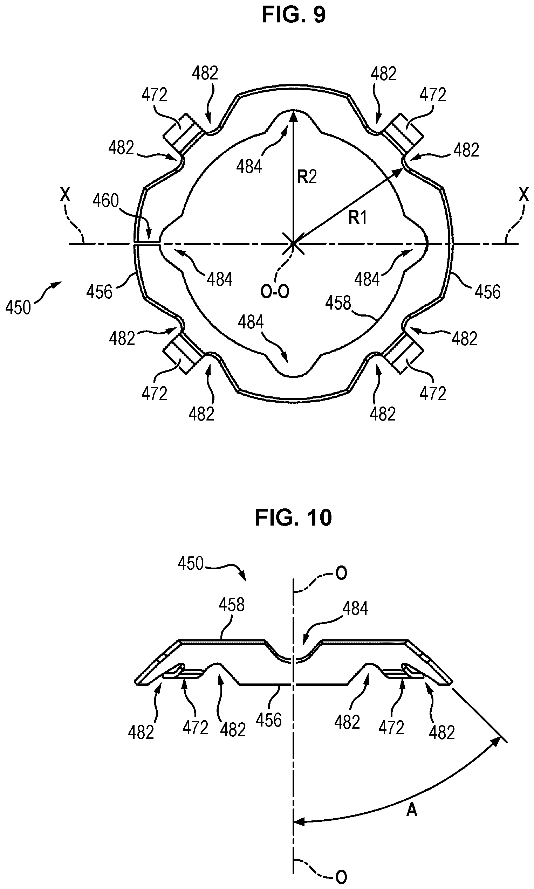

On a représenté sur les figures 9 et 10, une variante de réalisation du coussinet conique 450 conforme à la présente invention sur laquelle on retrouve une rondelle en forme de tronc de cône possédant une fente radiale traversante 460, des moyens anti-rotation formés en l'espèce de quatre languettes 472 en saillie sur la périphérie radialement externe 456 du coussinet et des encoches 482 formées sur la périphérie radialement externe 456 du coussinet de part et d'autre des languettes anti-rotation 472. Le coussinet conique 450 comprend également des encoches 484 formées sur le bord radialement interne 458 du coussinet. Notamment, le coussinet conique 450 peut comprendre quatre encoches 484 équiréparties autour de l'axe O-O, en quinconce avec les quatre languettes 472, c'est-à-dire décalées angulairement de 45° par rapport aux languettes 472. Ainsi selon le mode de réalisation des figures 9 et 10, les lumières oblongues 480 réalisées dans la masse du coussinet sont remplacées par les encoches 484 débouchant sur le bord radialement interne 458 du coussinet.

Là encore, le plus grand rayon R2 des encoches 484 radialement internes est supérieur au plus petit rayon R1 des encoches 482 formées sur le bord radialement externe 456. Ainsi, l'huile qui atteint le fond des encoches radialement externes 482 est balayée par le bloc cylindres 334 lors du déplacement à rotation relative et peut parvenir aux encoches radialement internes 484 en balayant l'intégralité de la surface du coussinet conique 450. Les encoches radialement internes 484 peuvent également être alimentées par les rainures précitées 136 formées dans le fond des logements 135 recevant les languettes 472.

Les encoches 482 et 484 lorsqu'elles sont remplies d'huile forment, comme le mode de réalisation précédemment décrit en regard des figures 4 à 8, des veines d'huiles qui couvrent toute l'étendue radiale du coussinet lisse conique 450.

A titre d'exemple non limitatif l'angle d'ouverture A du coussinet lisse conique 450 illustré sur les figures 9 et 10 peut être compris entre 30 et 60°, préférentiellement de l'ordre de 45°, le rayon R3 du bord radialement externe 456 étant typiquement compris entre 40 et 60 mm, avantageusement de l'ordre de 47,5mm, tandis que le rayon R4 du bord radialement interne 458 est typiquement compris entre 25 et 50 mm, avantageusement de l'ordre de 35mm.

Le palier lisse conique 450 permet de reprendre les efforts axiaux et radiaux comme indiqué précédemment. Le bloc cylindres 334 étant poussé contre le palier coussinet conique 450, par le distributeur 332, il est toujours en appui contre ce coussinet lisse conique 450 et ce dernier peut reprendre les efforts radiaux. Le palier lisse conique 450 permet d'annuler tous les jeux et permet un bon centrage, sans influer sur le réglage du roulement du rouleaux 442, c'est-à-dire son serrage (tension ou précharge nécessaire pour que le roulement conique 442 n'ait pas de jeu axial).

Le serrage ou précharge axiale du roulement 442 et du coussinet lisse conique 450, destinée à assurer une pré-tension ou pré-contrainte, peut être réalisée par tous moyens appropriés. Elle consiste en une mise sous tension de l'arbre 222 qui garantit que les moyens de palier 400 et 450 sont toujours en appui.

Selon le mode de réalisation illustré sur la figure 3, ce serrage ou précharge axiale est opéré par un système de serrage 270 comprenant un anneau d'arrêt élastique 272 placé dans une gorge complémentaire formée sur la périphérie de l'arbre 222, au niveau de l'interface entre le bloc cylindres 334 et le distributeur 332.

L'arbre 222 est par ailleurs épaulé et possède sur son extrémité distale un tronçon 223 qui sert d'appui axial au roulement 442. Ainsi l'on comprend que l'empilement axial formé par le roulement 442, l'élément 116 de boîtier, le coussinet 450 et le bloc cylindres 334 est pris en sandwich entre l'épaulement précité 223 et l'anneau d'arrêt 272.

Pour assembler la machine, après empilement des pièces précitées, les paliers 442 et 450 sont pressés sous tension, par exemple à la presse, puis l'anneau d'arrêt 272 est placé dans sa gorge de réception formée dans l'arbre 200.

Le cas échéant une bague 274 peut être intercalée entre l'anneau d'arrêt 272 et le bloc cylindres 334 pour régler le serrage ou précharge axiale.

Bien entendu l'anneau d'arrêt 272, associé le cas échéant avec la bague entretoise 274, peut être remplacé par tous moyens équivalents, par exemple un système de butée axiale filetée, tel qu'une bague filetée.

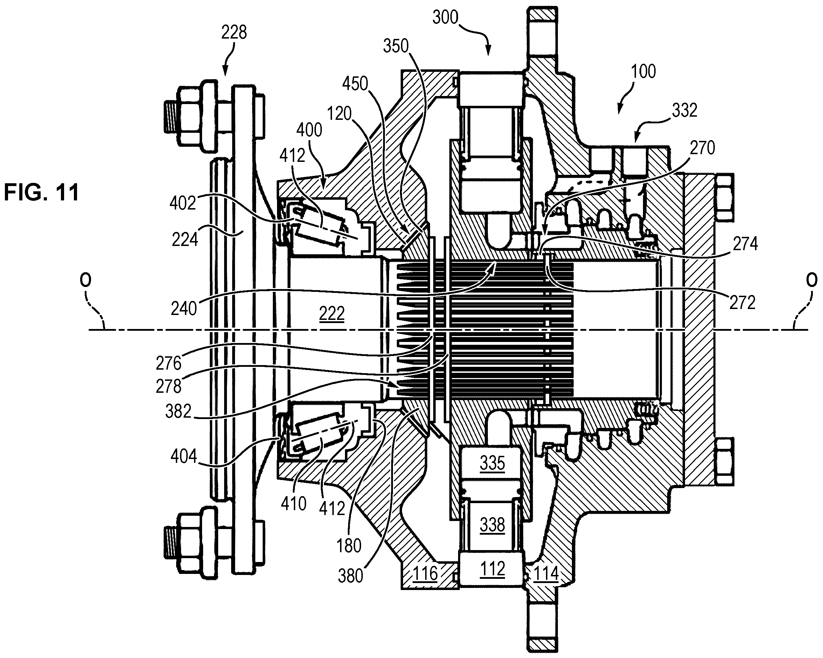

On a représenté sur la figure 11, une variante de réalisation de machine hydraulique conforme à la présente invention qui se distingue du mode de réalisation illustré sur la figure 3 par le fait que le coussinet conique 450 n'est pas en appui sur le bloc cylindres 334, mais est en appui sur une bague conique 380 liée à rotation avec l'arbre 222 par des cannelures longitudinales 382.

La bague 380 est placée entre l'élément latéral de boîtier 116 et le bloc cylindres 334, à distance de ce bloc. Elle définit la portée conique 350 qui porte le coussinet 450.

Selon le mode de réalisation représenté sur la figure 11, le coussinet lisse conique 450 est placé en prétension, c'est-à-dire en précontrainte à l'aide d'un système de serrage 270 associé à la bague conique 380. Un tel système de serrage 270 peut faire l'objet de nombreux modes de réalisation.

De préférence, il est constitué d'un arrêt formé par exemple d'un anneau élastique ou butée 276 lié axialement à l'arbre 222. L'arrêt 276 peut être associé à une bague ou pièce d'appui, similaire à la bague entretoise précitée 274, intercalée entre la bague 380 et ledit arrêt 276.

L'arrêt ou butée 276 peut être formé d'un arrêt élastique placé dans une gorge de l'arbre 222 ou d'un moyen fileté vissé sur l'arbre 222, comme la butée axiale 272 précitée en regard de la figure 3.

Après avoir assemblé par empilement axial, l'ensemble des pièces composant la machine représentée sur la figure 11, sur le tronçon central 222 de l'arbre 200, le coussinet lisse conique 450 est placé sous tension à la presse avant de positionner l'anneau 276 constituant les moyens d'arrêt 270.

Selon le mode de réalisation illustré sur la figure 11 l'arrêt et le serrage axiaux de la bague 380 sont dissociés de l'arrêt axial du bloc cylindres 334.

De préférence le bloc cylindres 334 est lui-même bloqué axialement par un arrêt 278 lié axialement à l'arbre 222 sur le côté distal du bloc cylindres 334, c'est-à-dire sur le côté du bloc cylindres 334 dirigé vers la bague conique 380.

L'arrêt ou butée axial 278 associé au bloc cylindres 334 peut être formé de tous moyens appropriés, par exemple là encore d'un arrêt ou anneau élastique placé dans une gorge de l'arbre 222 ou d'un moyen fileté vissé sur l'arbre 222.

On a représenté sur la figure 11 l'anneau d'arrêt 272 lié axialement à l'arbre 222 sur le côté proximal de l'arbre 222, au niveau de l'interface entre le bloc cylindres 334 et le distributeur 332. Cette butée 272 n'est cependant pas obligatoire dans le cadre du mode de réalisation représenté sur la figure 11.

L'empilement axial précité composant la machine hydraulique illustré sur la figure 11 comprend l'arbre 200, le joint 404, le roulement 442, le joint 180, l'élément latéral 116 de boîtier, le coussinet lisse conique 450, la bague 380, la butée axiale 276, la butée axiale 278, la came multilobée 112 et le bloc cylindres 334, le distributeur 332 et l'élément latéral de boîtier 114.

Le fonctionnement du mode de réalisation représenté sur la figure 11 reste par ailleurs identique à celui illustré sur la figure 3.

Là encore, l'utilisation d'un coussinet lisse conique 450 conforme à l'invention permet de reprendre à la fois les efforts axiaux appliqués entre le bloc cylindres 334 et le boîtier 100, en particulier dus au distributeur, et les efforts radiaux induits notamment par le déplacement cyclique des galets 338 sur la came multilobes 112. Le coussinet lisse conique 450 conforme à l'invention permet ainsi d'éviter toute perturbation du roulement à rouleaux 442 et permet à ce dernier de supporter des efforts importants dus à l'accessoire lié à la prise de force 228.

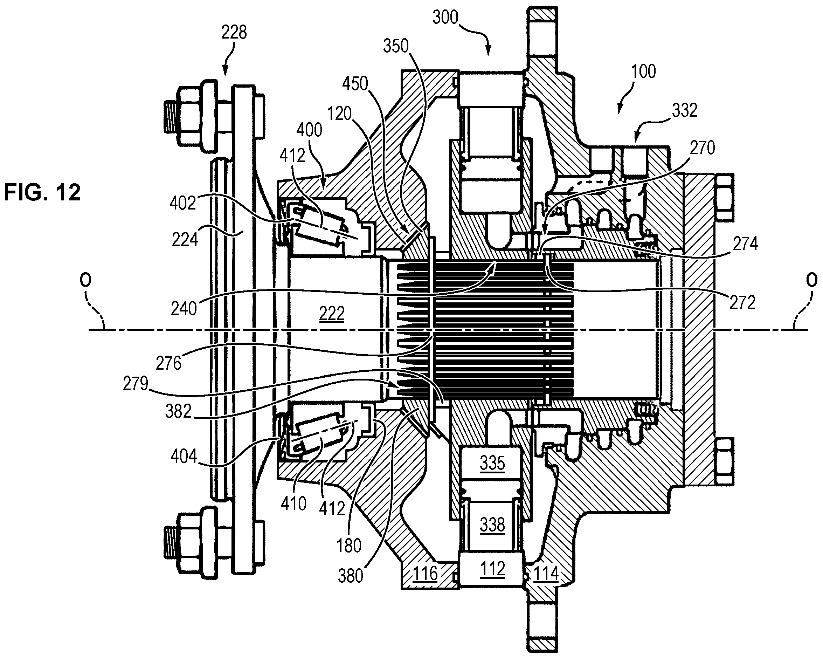

La variante de réalisation illustrée sur la figure 12 se distingue du mode de réalisation illustré sur la figure 11 par le fait que la butée axiale 278 formée par un anneau d'arrêt élastique liée axialement à l'arbre 222 selon la figure 11, est remplacée par une bague 279 intercalée entre la butée axiale 276 associée à la bague 380 et le bloc cylindres 334.

On notera que selon les modes de réalisation conformes à l'invention illustrés sur les figures annexées, la machine hydraulique conforme à la présente invention comprend des moyens formant paliers composés par la combinaison d'un seul roulement à rouleaux 442 et du coussinet lisse conique 450.

Bien entendu, la présente invention n'est pas limitée aux modes de réalisation particuliers qui viennent d'être décrits, mais s'étend à toute variante conforme à son esprit.

On a décrit précédemment des modes de réalisation de machines hydrauliques comprenant un palier formé d'un coussinet lisse conique 450 associé de préférence à un roulement à rouleaux coniques 400/442. L'invention n'est cependant pas limitée à ce mode de réalisation. Dans le cadre de l'invention les machines hydrauliques peuvent par exemple être équipées de deux coussinets lisses coniques 450 du type précédemment décrit. Dans ce cas la machine de préférence ne comprend que ces deux coussinets lisses coniques 450 et donc ne comprend pas de roulement additionnel. Les deux coussinets lisse coniques 450 sont de préférence placés dans l'huile.

Comme indiqué précédemment, la présente invention permet une réalisation compacte et un support fiable de l'arbre 200. En particulier, elle permet d'obtenir un palier très court axialement, de grande surface d'appui, et de diamètre réduit. Elle permet donc également de réduire le diamètre de l'arbre. Le prix du palier s'en trouve réduit.

On a décrit précédemment, des modes de réalisation dans lesquels la came multilobes 112 est solidaire du boîtier et radialement externe et le bloc cylindres 334 est lié à rotation avec l'arbre et radialement interne par rapport à la came 112.

Bien entendu, la cinématique inverse peut être utilisée. En d'autres termes, la came multilobes peut être solidaire de l'arbre central et être donc radialement interne et dans ce cas le bloc cylindres est lié au boîtier et placé radialement sur l'extérieur de la came multilobée.

Par ailleurs on a décrit précédemment des modes de réalisation de machines hydrauliques comportant un ensemble 300 comportant des pistons radiaux par rapport à l'axe central O-O de la machine.

En variante l'invention s'applique également à des machines hydrauliques comprenant un ensemble 300 comportant des pistons axiaux, c'est-à-dire qui se déplacent parallèlement à l'axe central O-O de la machine. La structure générale d'une telle machine hydraulique à pistons axiaux est bien connue en soi de l'homme de l'art. On en trouvera un exemple dans le document FR 2 298 017 au nom de la Demanderesse. L'architecture des machines hydrauliques à pistons axiaux compatibles avec l'invention et incorporant notamment un coussinet lisse conique du type précité, ne sera donc pas décrite par la suite.

Comme on l'a indiqué précédemment la machine conforme à la présente invention peut être munie d'un frein intercalé entre un élément du boîtier 100 et un élément de l'arbre 200.

Un tel frein comprend de préférence des disques empilés et liés alternativement à rotation avec l'élément du boîtier 100 et l'élément de l'arbre 200. Ils sont sollicités au repos en appui, soit en position de freinage, par un organe élastique, par exemple une rondelle Belleville.

Plus précisément de préférence l'organe élastique agit sur un piston en appui sur l'empilement des disques.

Le frein peut être commandé en position de défreinage par application d'une pression dans une chambre de commande ou chambre de défreinage qui agit sur le piston à l'encontre de l'organe élastique. La chambre de commande en défreinage est disposée entre l'empilement de disques et la rondelle de sollicitation, plus précisément entre l'empilement de disques et le piston.

Elle est alimentée par tous moyens appropriés.

Le boîtier 100 pourra notamment faire l'objet de nombreuses variantes de réalisation. Le boîtier 100 pourra par exemple être conforme au mode de réalisation illustré d'une manière générale sur la figure 1 selon laquelle l'arbre comprend un élément central et un élément radialement externe et le boîtier comprend une extension longitudinale intercalée entre l'élément central et l'élément radialement externe, en disposant un coussinet lisse conique 450 conforme à l'invention entre un élément du boîtier 100 et un élément de l'arbre 200.

La prise de force 228 peut être de toute nature, pour réaliser un entrainement en rotation. Ce peut être une sortie d'arbre conique, ou a clavette, ou un pignon pour une chaine ou un barbotin de chenille. Ce peut être également par exemple un flasque destiné à recevoir une roue d'un véhicule.

Les machines conformes à l'invention sont de préférence réversibles, et donc fonctionnent indifféremment en tant que pompe ou moteur, et peuvent également tourner dans deux sens de rotation.

## Revendications

1. Machine hydraulique à pistons comprenant :
- un boîtier (100),
- un arbre (200) mobile à rotation par rapport au boîtier (100),
- une came (112) solidaire de l'un du boîtier (100) ou de l'arbre (200),
- un bloc cylindres (334) comprenant des pistons (336) mobiles dans le bloc cylindres (334) en regard de la came (112) pour générer une rotation relative entre le bloc cylindres (334) et la came (112), ledit bloc cylindres (334) étant lié à rotation avec l'autre de l'arbre (200) ou du boîtier (100),
- des moyens (400) formant paliers de guidage à rotation de l'arbre (200) par rapport au boîtier (100),
dans laquelle les moyens (400) formant paliers de guidage à rotation comprennent un coussinet lisse conique (450) intercalé entre un élément de boîtier (116) et un élément (334, 380) lié à rotation avec l'arbre (222), la machine hydraulique étant **caractérisée en ce que** le coussinet lisse conique (450) comprend une fente radiale (460).

2. Machine hydraulique à pistons selon la revendication 1, dans laquelle les moyens (400) formant paliers de guidage à rotation comprennent un coussinet lisse conique (450) intercalé entre le bloc cylindres (334) et un élément (116) de boîtier (100).

3. Machine hydraulique à pistons selon la revendication 1, dans laquelle les moyens (400) formant paliers de guidage à rotation comprennent un coussinet lisse conique (450) intercalé entre un élément de boîtier (116) et une bague conique (380) liée à rotation avec l'arbre (222).

4. Machine hydraulique à pistons selon l'une des revendications 1 à 3, dans laquelle le coussinet lisse conique (450) comprend des moyens anti-rotation (470, 472) par rapport à un élément support (100), par exemple sous forme d'au moins une languette radiale (472).

5. Machine hydraulique à pistons selon l'une des revendications 1 à 4, dans laquelle le coussinet lisse conique (450) comprend des moyens, tels que des encoches (480, 482, 484), permettant d'assurer une couverture d'un fluide de lubrification sur la totalité de la surface (452) du coussinet lisse conique (450) en déplacement relatif par rapport à la pièce (334) en vis-à-vis.

6. Machine hydraulique à pistons selon la revendication précédente, dans laquelle le coussinet lisse conique (450) comprend des encoches (482, 484) sur l'un au moins de son bord radialement externe (456) et/ou de son bord radialement interne (458) pour assurer une entrée du fluide de lubrification sur la surface (452) du coussinet conique (450).

7. Machine hydraulique à pistons selon la revendication 4 prise en combinaison avec l'une des revendications 5 ou 6, dans laquelle les moyens anti-rotation (470) sont des languettes (472) prévues sur un bord radial (456, 458) du coussinet conique (450), et dans laquelle des encoches d'entrée de fluide de lubrification (482) sont adjacentes aux languettes anti-rotation (472).

8. Machine hydraulique à pistons selon l'une des revendications 5 à 7, dans laquelle le coussinet conique (450) comprend des encoches d'entrée d'huile (482) sur son bord radialement externe (456) et des encoches complémentaires (480, 484) formées dans sa masse ou sur son bord radialement interne (458).

9. Machine hydraulique à pistons selon la revendication précédente, dans laquelle le plus grand rayon (R2) des encoches (480, 484) formées dans la masse ou sur le bord radialement interne (458) du coussinet conique (450) est supérieur au plus petit rayon (R1) des encoches (482) débouchant sur le bord radialement externe (456) du coussinet conique (450).

10. Machine hydraulique à pistons selon l'une des revendications qui précèdent prise en combinaison avec la revendication 4, dans laquelle les moyens anti-rotation (470) sont des languettes (472) en saillie, et dans laquelle le coussinet lisse conique (450) comprend des lumières radiales (480) de passage d'huile en regard des languettes anti-rotation (472).

11. Machine hydraulique à pistons selon l'une des revendications précédentes, dans laquelle le coussinet lisse conique (450) comprend deux jeux de lumières ou encoches (480, 482, 484) décalées angulairement et séparées, couvrant des plages radiales qui se superposent de sorte que les lumières et encoches (480, 482, 484) couvrent en complément la totalité de l'étendue radiale du coussinet (450).

12. Machine hydraulique à pistons selon l'une des revendications précédentes, dans laquelle l'un des éléments adjacents au coussinet lisse conique (450), bloc cylindres (334) et élément de boîtier (100) ou arbre (200) ou bague support (380), comprend un muret d'arrêt (124) du coussinet lisse conique (450) placé en regard de l'un de ses bords périphériques, de préférence son bord périphérique radialement externe (456), l'élément (116) qui définit le muret (124) comportant notamment un dégagement (128) en regard du muret (124) permettant au moins un léger fléchissement sous la pression afin de réduire la pression sur les bords du coussinet (450).

13. Machine hydraulique à pistons selon l'une des revendications précédentes, dans laquelle l'un des éléments adjacents au coussinet lisse conique (450), bloc cylindres (334) et élément de boîtier (100) ou arbre (200) ou bague support (380), possède un dégagement (360) en regard du coussinet conique (450) évitant un appui direct sur le coussinet conique (450) sur la totalité de son étendue radiale.

14. Machine hydraulique à pistons selon l'une des revendications précédentes, dans laquelle la machine comprend en outre un roulement (442) disposé entre un élément de boîtier (116) et un élément de l'arbre (200), de préférence un roulement conique à rouleaux.

15. Machine hydraulique à pistons selon l'une des revendications précédentes, dans laquelle le coussinet lisse conique (450) est serré entre un élément de boîtier (116) et le bloc cylindres (334) et comporte un système de serrage sous précontrainte (270) de l'arbre (200) et du bloc cylindres (334).

16. Machine hydraulique à pistons selon l'une des revendications précédentes, le coussinet lisse conique (450) est placé dans un fluide tel que de l'huile.

17. Coussinet lisse conique destiné à équiper une machine hydraulique selon l'une des revendications précédentes, **caractérisé en ce qu'**il comprend des moyens, tels que des encoches (480, 482, 484), permettant d'assurer une couverture d'un fluide de lubrification sur la totalité de la surface (452) du coussinet lisse conique (450) en déplacement relatif par rapport à la pièce (334) en vis-à-vis et par le fait qu'il comprend une fente radiale (460).

18. Engin, tels que véhicules ou tout engin de chantier, équipé d'au moins une machine hydraulique selon l'une des revendications 1 à 16.

## Patentansprüche

1. Hydraulische Kolbenmaschine, die Folgendes umfasst:
- ein Gehäuse (100),
- eine Welle (200), die im Verhältnis zum Gehäuse (100) drehbeweglich ist,
- eine Nocke (112), die an einem von Gehäuse (100) oder Welle (200) befestigt ist,
- einen Zylinderblock (334), der Kolben (336) umfasst, die im Zylinderblock (334) gegenüber dem Nocken (112) beweglich sind, um eine relative Drehung zwischen dem Zylinderblock (334) und dem Nocken (112) zu erzeugen, wobei der Zylinderblock (334) drehbar mit dem anderen von Welle (200) oder Gehäuse (100) verbunden ist, und
- Mittel (400), die drehbare Führungslager der Welle (200) im Verhältnis zum Gehäuse (100) bilden,
wobei die drehbare Führungslager bildenden Mittel (400) eine konische Gleitlagerbuchse (450) umfassen, die zwischen einem Gehäuseelement (116) und einem Element (334, 380), das drehbar mit der Welle (222) verbunden ist, eingefügt ist, wobei die hydraulische Maschine **dadurch gekennzeichnet ist, dass** die konische Gleitlagerbuchse (450) einen radialen Schlitz (460) umfasst.

2. Hydraulische Kolbenmaschine nach Anspruch 1, wobei die drehbare Führungslager bildenden Mittel (400) eine konische Gleitlagerbuchse (450) umfassen, die zwischen dem Zylinderblock (334) und einem Element (116) des Gehäuses (100) eingefügt ist.

3. Hydraulische Kolbenmaschine nach Anspruch 1, wobei die drehbare Führungslager bildenden Mittel (400) eine konische Gleitlagerbuchse (450) umfassen, die zwischen einem Gehäuseelement (116) und einem konischen Ring (380), der drehbar mit der Welle (222) verbunden ist, eingefügt ist.

4. Hydraulische Kolbenmaschine nach einem der Ansprüche 1 bis 3, wobei die konische Gleitlagerbuchse (450) Verdrehsicherungsmittel (470, 472) im Verhältnis zu einem Trägerelement (100) umfasst, zum Beispiel in Form mindestens einer radialen Zunge (472).

5. Hydraulische Kolbenmaschine nach einem der Ansprüche 1 bis 4, wobei die konische Gleitlagerbuchse (450) Mittel umfasst, wie etwa Aussparungen (480, 482, 484), die ermöglichen, eine Abdeckung der gesamten Oberfläche (452) der konischen Gleitlagerbuchse (450) mit einer Schmierflüssigkeit bei relativer Verschiebung im Verhältnis zu einem gegenüberliegenden Bauteil (334) zu gewährleisten.

6. Hydraulische Kolbenmaschine nach dem vorhergehenden Anspruch, wobei die konische Gleitlagerbuchse (450) an mindestens einer ihrer radial äußeren Kante (456) und/oder ihrer radial inneren Kante (458) Aussparungen (482, 484) umfasst, um einen Einlass der Schmierflüssigkeit auf die Oberfläche (452) der konischen Lagerbuchse (450) zu gewährleisten.

7. Hydraulische Kolbenmaschine nach Anspruch 4, in Kombination mit einem der Ansprüche 5 oder 6, wobei die Verdrehsicherungsmittel (470) Zungen (472) sind, die an einer radialen Kante (456, 458) der konischen Lagerbuchse (450) vorgesehen sind, und wobei die Einlassaussparungen für die Schmierflüssigkeit (482) an die Verdrehsicherungszungen (472) angrenzen.

8. Hydraulische Kolbenmaschine nach einem der Ansprüche 5 bis 7, wobei die konische Lagerbuchse (450) Öleinlassaussparungen (482) an ihrer radial äußeren Kante (456) und komplementäre Aussparungen (480, 484) umfasst, die in ihrer Masse oder an ihrer radial inneren Kante (458) ausgebildet sind.

9. Hydraulische Kolbenmaschine nach dem vorhergehenden Anspruch, wobei der größte Radius (R2) der Aussparungen (480, 484), die in der Masse oder an der radial inneren Kante (458) der konischen Lagerbuchse (450) ausgebildet sind, größer als ein kleinster Radius (R1) der Aussparungen (482) ist, die an der radial äußeren Kante (456) der konischen Lagerbuchse (450) münden.

10. Hydraulische Kolbenmaschine nach einem der vorhergehenden Ansprüche, in Kombination mit Anspruch 4, wobei die Verdrehsicherungsmittel (470) vorstehende Zungen (472) sind, und wobei die konische Gleitlagerbuchse (450) gegenüber den Verdrehsicherungszungen (472) radiale Öldurchgangslumen (480) umfasst.

11. Hydraulische Kolbenmaschine nach einem der vorhergehenden Ansprüche, wobei die konische Gleitlagerbuchse (450) zwei Sätze winkelversetzter und getrennter Lumen oder Aussparungen (480, 482, 484) umfasst, die radiale Bereiche abdecken und derart übereinanderliegen, dass die Lumen und Aussparungen (480, 482, 484) zusätzlich die gesamte radiale Erstreckung der Lagerbuchse (450) abdecken.

12. Hydraulische Kolbenmaschine nach einem der vorhergehenden Ansprüche, wobei eines der Elemente, das an die konische Gleitlagerbuchse (450), den Zylinderblock (334) und das Gehäuseelement (100) oder die Welle (200) oder den Trägerring (380) angrenzt, eine Anschlagwand (124) der konischen Gleitlagerbuchse (450) umfasst, die gegenüber einer ihrer Umfangskanten, vorzugsweise ihrer radialen äußeren Umfangskante (456), platziert ist, wobei das Element (116), das die Wand (124) definiert, insbesondere einen Abstand (128) gegenüber der Wand (124) umfasst, der mindestens eine leichte Biegung unter Druck ermöglicht, um den Druck auf den Kanten der Lagerbuchse (450) zu reduzieren.

13. Hydraulische Kolbenmaschine nach einem der vorhergehenden Ansprüche, wobei eines der Elemente, das an die konische Gleitlagerbuchse (450), den Zylinderblock (334) und das Gehäuseelement (100) oder die Welle (200) oder den Trägerring (380) angrenzt, einen Abstand (360) gegenüber der konischen Lagerbuchse (450) besitzt, der eine direkte Abstützung auf der konischen Lagerbuchse (450) über deren gesamte radiale Erstreckung vermeidet.

14. Hydraulische Kolbenmaschine nach einem der vorhergehenden Ansprüche, wobei die Maschine ferner ein Lager (442), das zwischen einem Gehäuseelement (116) und einem Element der Welle (200) angeordnet ist, vorzugsweise ein konisches Rollenlager, umfasst.

15. Hydraulische Kolbenmaschine nach einem der vorhergehenden Ansprüche, wobei die konische Gleitlagerbuchse (450) zwischen einem Gehäuseelement (116) und dem Zylinderblock (334) eingeklemmt ist und ein Klemmsystem mit Vorspannung (270) der Welle (200) und des Zylinderblocks (334) umfasst.

16. Hydraulische Kolbenmaschine nach einem der vorhergehenden Ansprüche, wobei die konische Gleitlagerbuchse (450) in einer Flüssigkeit wie einem Öl platziert ist.

17. Konische Gleitlagerbuchse, die dazu bestimmt ist, eine hydraulische Maschine nach einem der vorhergehenden Ansprüche auszustatten, **dadurch gekennzeichnet, dass** sie Mittel, wie Aussparungen (480, 482, 484), umfasst, die ermöglichen, eine Abdeckung der gesamten Oberfläche (452) der konischen Gleitlagerbuchse (450) mit einer Schmierflüssigkeit bei relativer Verschiebung im Verhältnis zu einem gegenüberliegenden Bauteil (334) zu gewährleisten, wodurch sie einen radialen Schlitz (460) umfasst.

18. Arbeitsmaschine, wie Fahrzeuge oder alle Baumaschinen, die mit mindestens einer hydraulischen Maschine nach einem der Ansprüche 1 bis 16 ausgestattet ist.

## Claims

1. A piston hydraulic machine comprising:
- a housing (100),
- a shaft (200) mobile in rotation relative to the housing (100),
- a cam (112) attached to one of the housing (100) or shaft (200),
- a cylinder block (334) comprising pistons (336) mobile in the cylinder block (334) opposite the cam (112) for generating relative rotation between the cylinder block (334) and the cam (112), said cylinder block (334) being linked rotationally to the other of the shaft (200) or the housing (100),
- means (400) forming rotating guide bearings of the shaft (200) relative to the housing (100),
wherein the means (400) forming rotating guide bearings comprise a conical plain bushing (450) interposed between a housing element (116) and an element (334, 380) linked rotationally to the shaft (222), the hydraulic machine being **characterised in that** the conical plain bushing (450) comprises a radial slot (460).

2. The piston hydraulic machine according to claim 1, wherein the means (400) forming rotating guide bearings comprise a conical plain bushing (450) interposed between the cylinder block (334) and a housing (100) element (116).

3. The piston hydraulic machine according to claim 1, wherein the means (400) forming rotating guide bearings comprise a conical plain bushing (450) interposed between a housing element (116) and a conical ring (380) linked rotationally to the shaft (222).

4. The piston hydraulic machine according to any one of claims 1 to 3, wherein the tapered plain bushing (450) comprises anti-rotation means (470, 472) relative to a support element (100), for example in the form of at least one radial tab (472).

5. The piston hydraulic machine according to any one of claims 1 to 4, wherein the conical plain bushing (450) comprises means, such as notches (480, 482, 484), ensuring covering by lubricating fluid over the entire surface (452) of the conical plain bushing (450) in relative displacement with respect to the facing piece (334).

6. The piston hydraulic machine according to the preceding claims, wherein the conical plain bushing (450) comprises notches (482, 484) on at least one of its radially external edge (456) and/or its radially internal edge (458) to provide a lubricating fluid inlet onto the surface (452) of the conical bushing (450).

7. The piston hydraulic machine according to claim 4 taken in combination with any one of claims 5 or 6, wherein the anti-rotation means (470) are tabs (472) provided on a radial edge (456, 458) of the conical bushing (450), and wherein lubricating fluid inlet notches (482) are adjacent to the anti-rotation tabs (472).

8. The piston hydraulic machine according to any one of claims 5 to 7, wherein the conical bushing (450) comprises oil inlet notches (482) on its radially external edge (456) and complementary notches (480, 484) formed in its mass or on its radially internal edge (458).

9. The piston hydraulic machine according to the preceding claim, wherein the largest radius (R2) of the notches (480, 484) formed in the mass or on the radially internal edge (458) of the conical bushing (450) is greater than the smallest radius (R1) of the notches (482) terminating on the radially external edge (456) of the conical bushing (450).

10. The piston hydraulic machine according to any one of the preceding claims taken in combination with claim 4, wherein the anti-rotation means (470) are projecting tabs (472), and wherein the conical plain bushing (450) comprises radial oil passage lumens (480) opposite the anti-rotation tabs (472).

11. The piston hydraulic machine according to any one of the preceding claims, wherein the conical plain bushing (450) comprises two sets of angularly offset and separated lumens or notches (480, 482, 484) covering radial ranges which are superposed such that the lumens and notches (480, 482, 484) in addition cover the entire radial extent of the bushing (450).

12. The piston hydraulic machine according to any one of the preceding claims, wherein one of the elements adjacent to the conical plain bushing (450), cylinder block (334) and housing element (100) or shaft (200) or ring support (380), comprises a low stop wall (124) of the conical plain bushing (450) placed opposite one of its peripheral edges, preferably its radially external peripheral edge (456),
the element (116) which defines the low wall (124) comprising notably a clearance (128) opposite the low wall (124) allowing at least slight flexing under pressure to reduce pressure on the edges of the bushing (450).

13. The piston hydraulic machine according to any one of the preceding claims, wherein one of the elements adjacent to the conical plain bushing (450), cylinder block (334) and housing element (100) or shaft (200) or ring support (380) has a clearance (360) opposite the conical bushing (450) avoiding direct support on the conical bushing (450) over the entire radial extent thereof.

14. The piston hydraulic machine according to any one of the preceding claims, wherein the machine further comprises a bearing (442) arranged between a housing element (116) and an element of the shaft (200), preferably a tapered roller bearing.

15. The piston hydraulic machine according to any one of the preceding claims, wherein the conical plain bushing (450) is clamped between a housing element (116) and the cylinder block (334) and comprises a clamping system with pretension (270) of the shaft (200) and of the cylinder block (334).

16. The piston hydraulic machine according to any one of the preceding claims, the conical plain bushing (450) is placed in a fluid such as oil.

17. A conical plain bushing intended to equip a hydraulic machine according to any one of the preceding claims, **characterised in that** the conical plain bushing comprises means, such as notches (480, 482, 484), ensuring covering by lubricating fluid over the entire surface (452) of the conical plain bushing (450) in relative displacement with respect to the facing piece (334) and by the fact that it comprises a radial slot (460).

18. A machine, such as vehicles or any construction machine, equipped with at least one hydraulic machine according to any one of claims 1 to 16.
